# EUROPEAN PATENT APPLICATION

(11) **EP 1 331 258 A1**
(43) Date of publication of application: **30.07.2003**
(21) Application number: 02075368.7
(22) Date of filing: 23.01.2002
(51) Int. Cl.: C09J 153/02, C09J 7/02

(54) **Pressure sensitive adhesive compositions**

(71) Applicant: KRATON Polymers Research B.V., 1031 CM Amsterdam (NL)
(72) Inventor: Muyldermans, Xavier, 1348 Ottignies-Louvain-La-Neuve (BE); De Keyzer, Noel, Raymond, Maurice, 1348 Ottignies-Louvain-La-Neuve (BE)
(74) Representative: Schmitz, Jean-Marie

(57) **Abstract**

The present invention concerns a pressure sensitive adhesive composition comprising calculated on 100% of all the components,
(i) 30 to 45% of one or more block copolymers of structure ABA or (AB)ₙ-X or ABABA or BABAB or ABAB where each A independently is a polymer block of a monoalkenyl arene; each B block independently is a polymer block of a conjugated diene, or a mixture of conjugated dienes, hydrogenated in such a manner to leave a residual unsaturation content below 20% and preferably less than 1% and wherein the or each B block has more than 25% in weight of carbon atoms in the side chain; X is the residue of a coupling agent; n is an integer ranging from 2 to 8; the number average molecular weight of A is between 7000 and 20000, the monoalkenyl arene content of the or each block copolymer being between 10% and 35% by weight,
(ii) 40 to 55% of one or more tackifying resins compatible with block B or partially compatible with both blocks A and B, and
(iii) 5 to 25% of a plasticizer.

## Description

### Field of the Invention

The present invention concerns pressure sensitive adhesive compositions for use in tape and/or label applications which are based on hydrogenated block polymers of monoalkenyl arenas and blocks of fully hydrogenated conjugated dienes and more particularly relates to pressure sensitive adhesive compositions which are based on hydrogenated block copolymers of styrene and butadiene and/or isoprene and possessing a good balance of excellent tack, excellent cohesion, excellent service temperature, reduced viscosity and good UV and oxidative stability. According to a preferred embodiment the adhesive compositions comprise (i) one or more styrenic block copolymers, (ii) one or more tackifier resins, and (iii) one or more plasticizers.

### Background of the invention

Adhesive compositions based on styrenic block copolymers as thermoplastic elastomer components are well known in the art. These compositions are for instance used as pressure sensitive adhesive (PSA) for industrial tapes, packaging tapes and labels, and in multipurpose hot-melt adhesive compositions which may be used to bond or construct articles in the manufacture of disposable soft goods, such as diapers, feminine care articles, surgical drapes and the like. Styrene-isoprene-styrene block copolymers and styrene-butadiene-styrene block copolymers are widely used in these adhesive compositions.

Improved oxidative resistant adhesives are also available based on selectively hydrogenated styrene diene block copolymers, such as those described in St Clair, US 4,286,077, Harlan US 3,917,607 and Puletti US 4,419, 494. The block copolymers are either hydrogenated styrene butadiene styrene block copolymers or hydrogenated styrene isoprene styrene block copolymers.

Hydrogenated styrene butadiene styrene block copolymers consist of an Ethylene-Butylene (EB) rubber phase with separated styrenic domains. The EB rubber is essentially a random copolymer of ethylene and 1-butene. Thus, the ethylene monomers in the polymer chain are the result of butadiene, polymerized in a head-tail fashion (1,4-addition). As a consequence all carbon atoms (100%) of the butadiene monomer are in the polymer chain. On the other hand, the 1-butene monomers in the polymer chain are the result of polymer formation by polymerization of the butadiene by 1,2-addition. In this case, only two of the carbon atoms may be found in the polymer chain (50%) whereas the other two carbon atoms are in side chains (50%). In hydrogenated styrenic block copolymers conventionally used in pressure sensitive adhesives, there is about 60 % of hydrogenated 1,4 polybutadiene and 40 % of hydrogenated 1,2 polybutadiene. This leads to a structure where 80% of the carbon atoms are in the main chain and 20% in the side chains.

Hydrogenated styrene isoprene styrene block copolymers consist of an ethylene-propylene (EP) rubber phase with separated styrenic domains. The EP rubber is essentially a random copolymer of ethylene and propylene. In EP rubber, the polyisoprene is polymerised in majority with the 1,4 structure and a little bit with the 3,4 structure. In the 1,4 polyisoprene, there are 4 carbon atoms in the main chain and one in the side chain. The conventional hydrogenated styrenic block copolymer contains 80% of carbons in the main chain and 20 % in the side chains.

However, it has been discovered, that hydrogenated styrene butadiene styrene block copolymers or hydrogenated styrene isoprene styrene block copolymers in which the rubber mid-block contains more than 25% of carbon atoms in the side chains could also be successfully used in adhesive formulations.

Indeed, adhesive compositions based on such polymers confer to the formulation an improved balance of low hot-melt viscosity, elevated service temperature, elevated cohesion while keeping good adhesion and tack properties, making them useful as pressure sensitive adhesives.

Additionally, because the conjugated dienes are hydrogenated, these polymers develop also resistance to degradation by oxygen, ozone and ultraviolet light under long term exposure at ambient conditions. They might therefore be considered as weather resistant ingredient for PSA.

### Summary of the invention

Hydrogenated styrene butadiene styrene block copolymers with more than 25% in weight of carbon atoms in the side chain in the rubber midblock have been described in a sealant application in US 5,777,043. These block copolymers provide to the sealant formulation a low hot-melt viscosity and an elevated service temperature. However, these claimed sealant formulation compositions are not pressure sensitive adhesive formulations useful for tapes and labels applications. They don't have the adequate balance of tack and the workable hot-melt viscosity, namely 100 Pa.s at process temperatures typically in the range 170 - 190 °C.

According to the present invention, it has been discovered that such pressure sensitive adhesive compositions can be obtained with one or more hydrogenated block copolymers having the structure ABA; (AB)ₙ-X, ABABA, BABAB or ABAB wherein each A independently is a polymer block of a monoalkenyl arene; each B block independently is a polymer block of a conjugated diene or a mixture of conjugated dienes, hydrogenated in such a manner to leave a residual unsaturation content below 20%, said B block(s) having more than 25% by weight of carbon atoms in the side chains, provided that the right balance of block copolymer, well chosen hydrocarbon resins and plasticizer is selected. This allows the composition to reach a glass transition temperature that falls in the pressure sensitive adhesive viscoelastic window measured by Dynamic Mechanical Analysis as described by J Carper in 1989 Tappi Hot-Melt Symposium. The glass transition temperature limits as measured by Dynamic mechanical analysis are between -10 °C and + 10 °C. This translates into glass transition temperatures Tg measured by Differential Scanning Calorimetry (DSC) between -25°C to - 5 °C.

Moreover, it has been surprisingly discovered that the adhesive compositions of the present invention show much higher service temperatures than those shown in the examples of US 5,777,043. All the measured service temperatures are well above 100°C as measured with a weight of 500 g and a lap shear bond of about 6.5 cm² (1 square inch). On the contrary, in the example of US 5,777, 043, the service temperatures are at maximum 54.5°C obtained with a weight of 190 g and a lap shear bond of 6.5 cm².

It has also been discovered that elevated service temperature values (SAFT values >100°C), similar to those measured with formulations based on hydrogenated styrenic block copolymers containing 20% of carbon atoms in the side chain could be obtained, but with a significantly much lower hot-melt viscosity. Therefore it has been further discovered that the polymer content in the formulation could be increased, while keeping low hot-melt viscosity and increasing even further the SAFT value.

Next, it has also been surprisingly discovered that a selection of suitable type of hydrocarbon resin having polarity (like an aromatic structure) provides to the adhesive composition elevated shear properties under static load as measured by the holding power with a 2 kg weight.

The present invention is related to pressure sensitive adhesive compositions for use in tape and/or labels.

The adhesive composition, calculated on 100% of all the components, comprises
(I) 30 to 45% of one or more block copolymers of structure ABA or (AB)ₙ-X or ABABA or BABAB or ABAB were each A independently is a polymer block of a monoalkenyl arene; each B block independently is a polymer block of a conjugated diene, or a mixture of conjugated dienes, hydrogenated in such a manner to leave a residual unsaturation content below 20% and preferably less than 1% and wherein the or each B block has more than 25% in weight of carbon atoms in the side chain; X is the residue of a coupling agent; n is an integer ranging from 2 to 8; the number average molecular weight of A is between 7 000 and 20 000, the monoalkenyl arene content of the or each block copolymer being between 10% and 35% by weight,
(II) 40 to 55% of one or more tackifying resins compatible with block B or partially compatible with both blocks A and B.
(III) 5 to 25 % of a plasticizer
(IV) and optionally additional components such as polyolefins, antioxidants, fillers, UV stabilizers and end-block compatible resins. According to a preferred embodiment said tackifying resins contain or comprises a hydrocarbon resin having a certain amount of aromaticity to increase the adhesion to polar substrates.

### Detailed description of the Invention

### Component (I)

One of the primary components of the adhesive composition of the present invention is the above-described hydrogenated block copolymer which contains B block(s) that have more than 25% by weight of carbon atoms in the side chain.

It is important that the polymer be hydrogenated so that the structural integrity of the polymer is preserved even if outside forces that cause degradation are encountered. The block copolymer may be hydrogenated as generally described in the prior art, preferably so as to reduce at least 80%, preferably of any olefinic double bonds in the polymer chains. Suitably at least 90 percent, more preferably at least 99 percent of the original olefinic unsaturation is hydrogenated.

The butadiene used herein must produce a polymer rubber block before hydrogenation with a high carbon content in the side chain. The purpose here is to introduce chain branching and to reduce the size of the main polymer backbone (since some of the carbons in the diene are in the pendant group) which reduces the end-to-end distance of the molecule and, in turn, its viscosity in the solution, and the flow viscosity of the finished polymer.

In other words, the percent of 1,4 addition of the butadiene should be less than 60% by weight, preferably 20 to 30%wt. At 60% or higher, the polymer viscosity is similar to conventional polymers and there is no advantage regarding the viscosity. Less than 10% wt, the viscosity decrease has reached a plateau and no longer drops with lower 1,4 content. Therefore, there is no further advantage. This preference applies mutatis mutandis in respect of the isoprene.

Anionic polymerization of conjugated diene hydrocarbons with lithium initiators is well known as described in U.S. Patents Nos. 4,039,593 and Re. 27,145 which descriptions are incorporated herein by reference. Polymerization commences with a monolithium, dilithium, or polylithium initiator which builds a living polymer backbone at each lithium site. Typical living polymer structures containing polymerized conjugated diene hydrocarbons are:
X-B-Li
X-A-B-Li
X-A-B-A-Li
Li-B-Y-B-Li
Li-A-B-Y-B-A-Li
wherein B represents polymerized units of one or more conjugated diene hydrocarbons such as butadiene or isoprene, A represents polymerized units of one or more vinyl aromatic compounds such as styrene, X is the residue of a monolithium initiator such as sec-butyllithium, and Y is the residue of a dilithium initiator such as the diadduct of sec-butyllithium and m-diisopropenylbenzene. Some structures, including those pertaining to polylithium initiators or random units of styrene and a conjugated diene, generally have limited practical utility although known in the art.

The anionic polymerization of the conjugated diene hydrocarbons is typically controlled with structure modifiers such as diethylether or ethylglyme(1,2-diethoxyethane) to obtain the desired amount of 1,2-addition. As described in Re 27,145 which is incorporated by reference herein, the level of 1,2-addition of a butadiene polymer or copolymer can greatly affect elastomeric properties after hydrogenation. The 1,2-addition of butadiene polymers significantly and surprisingly additionally influences the polymer as described above. A 1,2-addition of about 40% is achieved during polymerization at 50°C with about 6% by volume of diethylether or about 200 ppm of ethylglyme in the final solution. A 1,2 addition of about 47% (within the scope of this invention) is achieved during polymerization by the presence of about 250 ppm of ortho-dimethoxybenzene (ODMB) in the final solution. A 1,2 addition of 78%(within the scope of this invention) is achieved during polymerization by the presence of about 300 ppm of 1,2-diethoxypropane (DEP) in the final solution.

In general, the polymers useful in this invention may be prepared by contacting the monomer or monomers with an organoalkali metal compound in a suitable solvent at a temperature within the range from--150°C to 300°C, preferably at a temperature within the range from 0°C to 100°C. Particularly effective polymerization initiators are organolithium compounds having the general formula:

rLi

wherein R is an aliphatic, cycloaliphatic, alkyl-substituted cycloaliphatic, aromatic or alkyl-substituted aromatic hydrocarbon radical having from 1 to 20 carbon atoms.

Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane, heptane and the like, cycloaliphatic hydrocarbons such as cyclohexane, cycloheptane and the like, alkyl-substituted cycloaliphatic hydrocarbons such as methylcyclohexane, methylcycloheptane and the like, aromatic hydrocarbons such as benzene and the alkyl-substituted aromatic hydrocarbons such as toluene, xylene and the like and ethers such as tetrahydrofuran, diethylether, di-n-butyl ether and the like.

The aforementioned polymers may be produced without coupling agent ("sequentially") or with a coupling agent. Suitable coupling agents in this respect are known to those skillen in the art. In case a coupling agent is used, this may lead to the presence of some uncoupled starting material in the block copolymers. Preferably, the coupling efficiency is high, e.g., varying between 60 and 95%.

The hydrogenation of these polymers may be carried out by a variety of well established processes including hydrogenation in the presence of such catalysts as Raney Nickel, noble metals such as platinum, palladium and the like and soluble transition metal catalysts. Suitable hydrogenation processes which can be used are ones wherein the diene-containing polymer or copolymer is dissolved in an inert hydrocarbon diluent such as cyclohexane and hydrogenated by reaction with hydrogen in the present of a soluble hydrogenation catalyst. Such processes are disclosed in U.S. Patent Nos. 3,113,986, 4,226,952 and Reissue 27,145, the disclosures of which are herein incorporated by reference. The polymers are hydrogenated in such a manner as to produce hydrogenated polymers having a residual unsaturation content in polydiene blocks of less than about 1 percent, and preferably as close to 0 percent as possible, of their original unsaturation content prior to hydrogenation. A titanium catalyst such as disclosed in U.S. Patent 5,039,755, which is herein incorporated by reference, may also be used in the hydrogenation process.

The molecular weights of linear polymers or unassembled linear segments of polymers such as mono-, di-, triblock, etc., or the arms of star polymers before coupling are conveniently measured by Gel Permeation Chromatography (GPC), where the GPC system has been appropriately calibrated with Polystyrene standards. For anionically polymerized linear polymers, the polymer is essentially monodisperse (weight average molecular weight/number average molecular weight ratio approaches unity), and it is both convenient and adequately descriptive to report the "peak" molecular weight of the narrow molecular weight distribution observed. Usually, the peak value is between the number and the weight average. The peak molecular weight is the molecular weight of the main species shown on the chromatograph, or polydisperse polymers the weight average molecular weight should be calculated from the chromatograph and used. The materials used in the columns of the GPC are styrene-divinyl benzene gels or silica gels. The solvent is tetrahydrofuran and the detector is a refractive index detector.

To be useful for pressure sensitive adhesive, the base block copolymer must have a number average molecular weight of the A block of between 7,000 and 20,000, whereas the monoalkenyl arene content of the or each block copolymer must be between 10% and 35% by weight. As a result, the number average molecular weight is typically from 65000 to 300000. Indeed, if the molecular weight is less than 65000 then the polymer loses its pressure sensitive adhesive properties, like the cohesion. If the molecular weight is more than 300000, then the polymer is not useful for adhesive applications, i.e., a too elevated hot-melt viscosity. The monoalkenyl arene content should range from 10% to 35 % because this confers the right balance of cohesion and processability to the polymer.

The glass transition temperature Tg of the elastomeric midblock depends on the ethylene and butylene ratio in the rubber. When the ethylene content decreases, the glass transition Tg increases as well (Thermoplastic elastomers - A Comprehensive Review - N.R. Legge, G. Holden, H.E. Schroeder - Hanser Publishers, 1987 p.510). The formulation glass transition temperature Tg can be calculated with the so-called Fox formulation as described in the Handbook of Pressure Sensitive Adhesive Technology, Chapter 13, Thermoplastic Rubbers, A-B-A block copolymers, page 369, Edited by Don Satas, Van Nostrand Reinhold - 1989.

The composition according to the present invention preferably comprises from 30 to 45% in weight of one or more hydrogenated styrenic block copolymer.

### Component (ii)

Suitable tackifiers may be selected from the group consisting of compatible C₅ hydrocarbon resins, hydrogenated C₅ hydrocarbon resins, styrenated C₅ resins, C₅/C₉ resins, styrenated terpene resins, fully hydrogenated or partially hydrogenated C₉ hydrocarbon resins, rosins esters, rosins derivatives and mixtures thereof.

For weatherable adhesive, fully hydrogenated hydrocarbon resins are preferred because they are inherently more stable against UV light.(Hercules Technical Information Bulletin OR-274 - Ultraviolet light stability of Regalrez Hydrocarbon Resins)

According to an embodiment of the present invention it has been surprisingly discovered that partially hydrogenated aromatic hydrocarbon resins (e.g., having a percentage of aromaticity of 3-20% based on 1H NMR determination) improve the adhesion of adhesive compositions on polar surfaces like glass or stainless steel. This effect allows the formulations to display elevated shear property under a static load. Partially hydrogenated aromatic hydrocarbon resins like Regalite® S-7100 or Regalite® S-5100 have been found to have such characteristics. These hydrocarbon resins might be used alone or in combination with other hydrocarbon resins.

The composition according to the present invention comprises 40 to 55 % by weight of one or more tackifying resins. Preferably a blend of resins is used, wherein the partially hydrogenated aromatic hydrocarbon resin comprises between 5 and 80% preferably 15 to 60% (by weight) of the resin blend.

### Component (iii)

Suitable plasticizers include plasticizing oils like low aromatic content hydrocarbon oils that are paraffinic or naphthenic in character (carbon aromatic distribution ≤ 5%, preferably ≤ 2%, more preferably 0% as determined according to DIN 51378). Those products are commercially available from the Royal Dutch/Shell Group of companies, like SHELLFLEX®, CATENEX®, EDELEX® ,ONDINA® oils. Other oils include KAYDOL® oil from Witco®, or TUFFLO® oils from Arco or PRIMOL® from Esso. Other plasticizers include compatible liquid tackifying resins like REGALREZ® R-1018. (SHELLFLEX, CATENEX, EDELEX, ONDINA, KAYDOL, TUFFLO and REGALREZ are trademarks).

It has been however discovered that the type of oil has an influence on the adhesion properties of adhesive compositions on polar surfaces like glass or stainless steel, allowing the formulations to display elevatproperty property under a static load.

Naphthenic oils, like Ondina 68 gives to the composition higher adhesion than paraffinic oils like Primol 352.

Other plasticizers may also be added, like olefin oligomers; low molecular weight polymers (≤ 30000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes.

The composition according to the present invention needs to contain a plasticizer. Alternatively, the or each Ilock copolymer (i) may be pre-blended with a small amount of plasticizer by the manufacturer of said copolymer.

The composition according to the present invention preferably comprises 5 to 25 % by weight of one or more plasticizer.

### Other components (non-limitative)

Other optional polymer components may be incorporated into the adhesive compositions according to the present invention. Particularly polyolefins are well known to be compatible with hydrogenated block copolymers.

Amongst those polyolefins, amorphous polyalpha-olefins (APAO) can be incorporated into the composition. These APAO are low molecular weight, saturated homopolymers, like atactic homopropylene (APP) or copolymers of ethylene/propylene (APE) like the Eastoflex® grades E-1023, E-1060 or E-1200, or propylene/hexene copolymers (APH) like D-127 and the like from Eastman or terpolymers such as ethylene/propylene/butene like Vestoplast® grades from Creanova.

Other polyolefins can be also used like the metallocene polyolefines elastomers which are, i.e., copolymers of ethylene/octene-1 or ethylene/hexene-1. Commercial grades are for example Engage® 8400, Engage® 8200 or Engage® 8100 manufactured by Dow-Dupont or Exact® 4049 manufactured by Exxon-Mobil.

Other polyolefins are the partial cristalline ethylene/propylene rubbers produced by Basell under the name Adflex®. Suitable grades are Adflex® 7244, Adflex® KS357P.

However, it is also known in the art that various other components can be added to modify the tack, the odor, the color of the adhesives. Antioxidants and other stabilizing ingredients can also be added to protect the adhesive from degradation induced by heat, light and processing or during storage.

Several types of antioxidants can be used, either primary antioxidants like hindered phenols or secondary antioxidants like phosphite derivatives or blends thereof. Examples of commercially available antioxidants are IRGANOX 565 from Ciba-Geigy (2.4-bis-(n-octylthio)-6-(4-hydroxy-3,5-di-tertiary-butyl anilino)-1,3,5-triazine), IRGANOX 1010 from Ciba-Geigy (tetrakis-ethylene-(3,5-di-tertiary-butyl-4-hydroxy-hydrocinnamate)methane) and POLYGARD HR from Uniroyal (tris-(2,4-di-tertiary-butyl-phenyl) phosphite). Other antioxidants developed to protect the gelling of the polybutadiene segments can also be use, like the SUMILIZER GS from Sumitomo (2[1-(2-hydroxy-3,5-di-ter-pentylphenyl)ethyl)]-4,6-di-tert-pentylphenylacrylate); SUMILIZER T-PD from Sumitomo (pentaerythrythyltetrakis(3-dodecylthiopropionate)); or mixtures thereof. (IRGANOX, POLYGARD and SUMILIZER are trademarks).

To protect the formulation against UV light several additives can be added to the composition. UV absorbers prevent UV absorption by reduction of the amount of light absorbed by chromophore group in the molecule. These products are 2-hydroxyphenyl-benzotriazoles and known as Tinuvin® P, Tinuvin® 326 or Tinuvin® 327 from Ciba. Alternatively light stabilizers can be used that are known as hindered amine light stabilizers (HALS). Products are Tinuvin® 770, Tinuvin® 765 and Tinuvin® 622.

Of special interest are also the end-block modifying and reinforcing resins. These resins are pure polystyrenic or polyalphamethylstyrenic resin like Endex® 155, or the Kristallex series from Eastman or the Norsolene W series from Cray Valley. These reinforcing resins bring polarity via their aromaticity to the formulation and improve the adhesion on polar surfaces. Moreover, depending on their glass transition temperature Tg, these resins might increase the formulation service temperature.

Another class of reinforcing resins consists of polyphenylene ether or polyphenylene oxide polymers. These resins are well known to increase the service temperature of adhesive formulations based on styrenic block copolymers. (Hansen in US 4,141,876). Of special interest is for example PPO® SA120 from GE Plastics. This PPE resin has a low Intrinsic Viscosity of 0.12 dl/g and is claimed to be more easily hot melt processable with styrenic block copolymers.

### Preparation of the composition

These compositions of the present invention might be processed by different techniques. Therefore, there may be used any process such as a mechanically mixing process making use of rolls, a Banbury mixer or a Dalton kneader, a hot-melt process characterized in that heating and mixing are conducted by using a melting kettle equipped with a stirrer, like a high shear Z-blade mixer or a single- or twin-screw extruder. In these cases, the processing temperature should be at least above 140°C to allows a good fluxing of the adhesive mass. In the solvent process, the compounding components are poured in a suitable solvent and stirred, thereby obtaining an intimate solution of the pressure sensitive adhesive composition. More detailed information on hot-melt or solution processing of styrenic block copolymers can be found in the TPE 5.2.1 bulletin" KRATON thermoplastic elastomers for adhesives, sealants and coating" from Kraton Polymers.

### Use of the composition

The present inventive adhesive compositions may be applied without using any solvent (e.g., hot-melt) to a base material such as paper or a plastic film by means of a proper coater, thereby producing various kinds of pressure sensitive adhesive tapes or sheets. Alternatively, those adhesive compositions might be coextruded with a film to make coextruded adhesive films. It may also be used as an adhesive or a sealant without applying to a base material.

The block copolymers according to the present invention are excellent in heat stability and hence scarcely undergo a change of melt viscosity with time upon heating and melting them. Therefore, the present adhesion compositions are particularly useful; with good flowability at elevated temperatures, as a hot-melt type pressure sensitive adhesive composition or co-extruded adhesive films.

Because the midblock polydiene of these block copolymers has been hydrogenated there are virtually no residual unsaturations left in the polydiene and therefore these block copolymers show an excellent resistance against ozone and UV light. Therefore, the present adhesive compositions are useful as weatherable pressure sensitive adhesive compositions.

These block copolymers can be used at elevated concentration in adhesive compositions allowing these compositions to have elevated service temperatures without chemical or UV/EB crosslinking. Therefore, the adhesive compositions can be used in pressure sensitive adhesives as masking tapes. These tapes when applied on a substrate withstand elevated service temperatures well above 110°C and thereafter are cleanly peeled away from the substrate without leaving any residue.

### Test methods

Standard peel, tack, cohesion and viscosity tests were carried out on these formulations as described in the Test method manual for Pressure Sensitive Tapes from the Pressure Sensitive Tape Council (PSTC), the standard FINAT test method for Pressure sensitive materials, the AFERA test methods for Pressure Sensitive Adhesive Tapes and the ASTM related methods. Chromed stainless steel plates (No. 304)("ss") have been used as testing surface as recommended by the FINAT.
- *Rolling Ball Tack* (RBT) is the distance, expressed in centimeters, a steel ball rolls on the adhesive film with a standard initial velocity (Pressure Sensitive Tape Council Test No. 6; ASTM D3121-73). Small numbers indicate aggressive tack.
- *Loop tack* (LT) was determined using PSTC-5 and FTM 9 loop tack method. High numbers LT indicate aggressive tack. Results are expressed in Newton/25 mm (N/25 mm).
- *Peel Adhesion* (PA) was determined by Pressure Sensitive Tape Council Method No. 1 and ASTM D3330-83. Large numbers indicate high strength when peeling a test tape from a steel substrate. Results are expressed in N/25 mm.
- *Holding Power* (HP) is the time required to pull a standard area (1.3 x 1.3 cm) of tape from a standard test surface (steel = ss, Kraft paper, PE film) under a standard load (1 kg, 2 or 5 kg), in shear at 2° (Pressure Sensitive Tape Council Method No. 7; ASTMD-3654-82). Long times indicate high adhesive strength. Results are expressed in hours (h) or minutes (min). The type of failure mode is expressed as adhesive failure (AF) or cohesive failure (CF). This test can be carried out at room temperature (about 23°C) or at a more elevated temperature, depending on the test.
- *The SAFT* (shear adhesion failure temperature) was measured by 2.5 x 2.5 cm Mylar to chromed ss plates with a 0.5 kg weight. The samples are placed in an oven and the temperature raised by 22 °C/minute. SAFT measures the temperature at which the lap shear assembly fails.
- *Hot-melt viscosity* (HMV) is measured with a rotational viscometer following ASTM D-3236-78. The viscosity is measured by the torque required to rotate a spindle at constant speed while immersed in a fluid. A sample is placed in a RVTDV-II equipped with a Brookfield Thermocell and the hot-melt viscosity is measured in a temperature range of 177°C to 190 °C. Results are expressed in Pascal.second (Pa.s).
- *Glass transition temperatures Tg* of the individual formulation ingredients - polymer, hydrocarbon r-sin, plasticizer - have been determined by Differential Scanning calorimetry with a temperature sweep of 40 °C/min. The Tg is measured at the onset of the transition.

### Sample Preparation

The different ingredients of the adhesive composition have been mixed in a Z-blade mixer at 180°C for 40 minutes. Part of the adhesive has been used to determine the hot-melt viscosity of the composition. The other part has been poured in toluene. Once dissolved, the adhesive has been applied at a coating weight of 28 g/m² on a 36 µm (micron) polyester film with a Braive bar coater. The coated samples have been laminated against a siliconised protective paper. Prior to testing, the samples have been stored for 24 hours in a conditioned room at 23°C and 50% relative humidity.

Definition of the products used in this invention

**Table 1**

| | |
|---|---|
| Polymer A | Polymer A is a styrene-ethylene-butylene-styrene block copolymer containing 30% of polystyrene, has number average weight of the styrene block of about 10,000; a total molecular weight of about 105 000 and 20% in weight of carbon atoms in the side chain |
| Polymer B | Polymer B is linear styrene-ethylene-butylene-styrene block copolymer containing 30% of polystyrene, has number average weight of the styrene block of about 10,000; a total molecular weight of about 105 000 and 27.5% in weight of carbon atoms in the side chain. |
| Polymer C | Polymer C is a linear styrene-ethylene-butylene-styrene block copolymer containing 30% of polystyrene, has number average weight of the styrene block of about 10,000; a total molecular weight of about 105 000 and 32.5% in weight of carbon atoms in the side chain. |
| Polymer D | Polymer D is a linear styrene-ethylene-butylene-styrene block copolymer containing 22% of polystyrene, has number average weight of the styrene block of about 10,000; a total molecular weight of about 140 000 and 25 % in weight of carbon atoms in the side chain. |
| Polymer E | Polymer E is a linear styrene-ethylene-butylene-styrene block copolymer containing 13% of polystyrene, has number average weight of the styrene block of about 5,000; a total molecular weight of about 148 000 and 20% in weight of carbon atoms in the side chain. |
| Polymer F | Polymer F is a linear styrene - ethylene-butylene-styrene block copolymer containing 22% of polystyrene, has number average weight of the styrene block of about 10,000; a total molecular weight of about 140 000 and 35% in weight of carbon atoms in the side chain. |
| Polymer G | Polymer G is a linear styrene-ethylene-butylene- styrene block copolymer containing 31% of polystyrene, has number average weight of the styrene block of about 30,000; a total molecular weight of about 280 000 and 35% in weight of carbon atoms in the side chain. |
| Polymer H | Polymer H is a styrene-ethylene-butylene-styrene block copolymer containing 31% of polystyrene, has number average weight of the styrene block of about 20,000; a total molecular weight of about 190 000 and 20% of carbon atoms in the side chain. |
| R-1090 | Regalite R-1090 is a fully hydrogenated aromatic resin with a softening point of 90°C manufactured by Eastman |
| S-1100 | Regalite S-1100 is a fully hydrogenated aromatic resin with a softening point of 100°C manufactured by Eastman |
| S-5100 | Regalite S-5100 is a 50% hydrogenated aromatic resin with a softening point of 100°C manufactured by Eastman |
| R-V1100 | Regalite V-1100 is a 100% hydrogenated aromatic resin with a softening point of 100°C manufactured by Eastman |
| E- 155 | Endex 155 is a copolymer of modified styrene resin with a softening point of 152°C manufactured by Eastman |
| P-SA120 | PPO® SA120 is a low Intrinsic Viscosity 0.12 dl/g polyphenylene ether resin from GE plastics |
| O-68 | Ondina N68 is a medicinal naphthenic white oil from Deutsche Shell Aktiengesellschaft |
| P-352 | Primol 352 is a paraffinic white oil from Esso |
| N-810 T | Nyplast 810 T is a naphthenic process oil from Nynas |
| T-6056 | Tufflo 6056 is a paraffinic white oil from Lyondell Lubricants |
| D-34 | Drakeol 34 is a paraffinic white oil from Pennreco |
| I- 1010 | Irganox 1010 is an antioxidant from Ciba |

### Example 1

Table 2 shows that, for a given polymer molecular structure, the hot-melt viscosity decreases significantly by a factor greater than 10 when the side chains increase in the mid-block as shown by the Comparative example A versus F-1/F-2 and Comparative example B versus F-4. The pressure sensitive adhesive compositions containing the polymer of the invention, at a polymer content of respectively 32 % and 34%, have an unexpected and attractive combination of low hot melt viscosity below or equal 17 Pa.s at 177 °C, and a SAFT value above 105°C.

However these formulations show a strong decrease in the holding power values because of an adhesive failure mode on the stainless steel plate. Comparative example C shows that without plasticizer, the formulation lacks tack and adhesion properties.

**Table 2**

| ***Ingredients %*** | | | | | | | |
|---|---|---|---|---|---|---|---|
| | **% side C** | **Comp A** | **F1** | **F-2** | **Comp B** | **Comp C** | **F-4** |
| Polymer A | 20 | 32 | | | | | |
| Polymer B | 27.5 | | 32 | | | | |
| Polymer C | 32.5 | | | 32 | | | |
| Polymer D | 25 | | | | 34 | 30 | |
| Polymer F | 35 | | | | | | 34 |
| R-1090 | | 51 | 51 | 51 | 51 | 69 | 51 |
| P-352 | | 16 | 16 | 16 | 14 | | 14 |
| I-1010 | | 1 | 1 | 1 | 1 | 1 | 1 |
| Tg | °C | -14 | | -13 | -14 | 10 | -13 |

| ***Properties*** | Units | | | | | | |
|---|---|---|---|---|---|---|---|
| RBT | Cm | 10 | 13 | >30 | 16 | >30 | >30 |
| LT | N/25 mm | 9 | 13 | 8 | 9 | 0 | 11 |
| PA | N/25 mm | 13 | 15 | 9 | 12 | 1.5 | 16 |
| HP ss 2 kg | Hours | >300 | 1 AF | 1 AF | 150 | | 3 AF |
| SAFT 0.5 kg | °C | 106 | 106 | 109 | 130 | 116 | 109 |
| HMV 177°C | Pa.s | 80 | 17 | 6.5 | 261 | | 21 |
| HMV 190°C | | | | | | 57 | |
| AF = adhesion | | | | | | | |
| failure on the ss plate | | | | | | | |

### Example 2

Table 3 shows that, by increasing the polymer content in the formulation (F-4/5 and 6), the service temperature as measured by the SAFT is increasing very significantly to elevated values. The hot-melt viscosity increases as expected but because these hydrogenated polymers and hydrocarbon resins are very stable against thermo-oxidation, the formulations can be coated at a more elevated temperature without negative effect on the formulation properties. As well known, higher temperatures lower the hot-melt viscosity. Formulation 6 shows that at 190°C, the hot-melt viscosity is 84 Pa.s, a value that is well below the conventional limit of 100Pa.s required by industrial processing. This formulation has also a very elevated service temperature of 127°C. Adhesive properties measured with Polymer E described in US 4,286,077 in Comparative example D is less performing than Polymer F of this invention. Adhesive properties measured with Polymer G in Comparative example E show that a too low polymer content cannot achieve elevated SAFT values. Comparative example F shows that without plasticizer, the formulation has poor tack and adhesion properties.

**Table 3**

| ***Ingredients* %** | ***Units*** | **F-4** | **F-5** | **F-6** | **COMP D** | **COMP E** | **COMP F** |
|---|---|---|---|---|---|---|---|
| Polymer E | | | | | 41.3 | | |
| Polymer F | | 34 | 37.4 | 41.3 | | 25 | 37.4 |
| Polymer G | | | | | | | |
| R-1090 | | 51 | 44.8 | 45.3 | 45.3 | 47 | 61.6 |
| P-352 | | 14 | 16.8 | 12.4 | 12.4 | | |
| T-6056 | | | | | | 27 | |
| D-34 | | | | | | | |
| I-1010 | | 1 | 1 | 1 | 1 | 1 | 1 |
| Tg | °C | -13 | -20 | -17 | | | 13 |

| ***Properties*** | Units | | | | | | |
|---|---|---|---|---|---|---|---|
| RBT | cm | >30 | 9 | >20 | 7 | 1.7 | >30 |
| LT | N/25 mm | 11 | 14 | 18 | 6 | 17 | 0 |
| PA | N/25 mm | 16 | 15 | 16 | 9 | 9 | 1.3 |
| HP ss 2 kg | hours | 3 | 1.2 AF | 7 AF | | 15 | |
| SAFT 0.5 kg | °C | 109 | 114 | 127 | 88 | 80 | 119 |
| HMV 177°C | Pa.s | 21 | 62 | - | 48 | - | - |
| HMV 190 °C | Pa.s | - | - | 84 | 33 | - | 55.4 |

### Example 3

Table 4 shows that by using polar hydrocarbon resins, like the partial hydrogenated aromatic hydrocarbon resins, the adhesion properties of the formulation increase significantly and very high cohesive formulations are obtained as seen by the holding power (HP) values. It is thought than the polarity brought into the formulation by the unhydrogenated C9 structures is contributing to the adhesion on the stainless steel and avoids the adhesion failure mode observed in previous examples.

As seen in Table 4, the increase in polymer content increases the service temperature up to 120°C as measured by the SAFT. Formulation 9 shows a particularly good balance of tack, peel, cohesion properties. The hot-melt viscosity at 190°C shows a particularly low 54 Pa.s value. Polymer E as decribed in US 4,286,077 in Comparative example G gives particularly a lower SAFT value.

**Table 4**

| ***Ingredients %*** | ***Units*** | **F-7** | **F-8** | **COMP G** | **F-9** |
|---|---|---|---|---|---|
| Polymer E | | | | 36 | |
| Polymer F | | 32 | 36 | | 38.7 |
| S-1100 | | 25.5 | 23.5 | 23.5 | 31.3 |
| S-5100 | | 25.5 | 23.5 | 23.5 | 11.6 |
| R-1090 | | | | | |
| E-155 | | | | | |
| S-120 | | | | | |
| O-68 | | | | | |
| P-352 | | 16 | 16 | 16 | 17.4 |
| I-1010 | | 1 | 1 | 1 | 1 |
| Tg | °C | -15 | -18 | | -22 |

| ***Properties*** | | | | | |
|---|---|---|---|---|---|
| RBT | Cm | >30 | >30 | 10 | 8 |
| LT | N/25 mm | 13 | 9 | 6 | 11 |
| PA | N/25 mm | 18 | 12 | 12 | 14 |
| HP ss 2 kg | Hours | >200 | >200 | | >200 |
| SAFT 0.5 kg | °C | 112 | 120 | 87 | 120 |
| HMV 177°C | Pa.s | 30 | 77 | 34 | 121 |
| HMV 190°C | Pa.s | | | 23 | 54 |

### Example 4

Table 5 shows the influence of the type of oil - in this case paraffinic -versus naphthenic - on the adhesive properties and particularly on the holding power values. Both formulations F-11 and F-13 show low holding power values because of an adhesion failure mode of the formulation on the stainless steel surface.

**Table 5**

| ***Inredients%*** | ***Units*** | **F-10** | **F-11** | **F-12** | **F-13** |
|---|---|---|---|---|---|
| Polymer B | | 32 | 32 | | |
| Polymer F | | | | 31.9 | 31.9 |
| R-1090 | | 51 | 51 | 47.9 | 47.9 |
| S-120 | | | | 6.4 | 6.4 |
| O-68 | | 16 | | 12.8 | |
| P-352 | | | 16 | | 12.8 |
| I-1010 | | 1 | 1 | 1 | 1 |
| Tg | °C | -12 | -14 | | |

| ***Properties*** | | | | | |
|---|---|---|---|---|---|
| RBT | Cm | >30 | 13 | >30 | >30 |
| LT | N/25 mm | 7 | 13 | 0.5 | 12 |
| PA | N/25 mm | 18 | 15 | 15 | 16 |
| HP ss 2 kg | Hours | >200 | 1 AF | >300 | 3 AF |
| SAFT 0.5 kg | °C | 108 | 106 | 136 | 132 |

### Example 5

Table 6 shows the influence of endblock reinforcing resins on adhesive and processing properties of adhesive formulations.

The addition of Endex 155 in F-14 does notproperty the SAFT property at all but increases significantly the Hot-melt viscosity. Moreover the tack properties, as seen by the Loop tack values, decrease.

A low molecular weight polyphenylene ether has been brought into the formulation after dissolution in a hot process oil Nyplast 810 T at 160°C. At a level of 2.2%, this resin does not increase the service temperature and it increases the hot-melt viscosity as well.

At higher loading (F-16), the adhesive formulation cannot be hot-melt processed anymore.

This indicates that these end-block reinforcing resins do not bring the right balance of service temperature/hot-melt viscosity to the adhesive compositions based on polymers of this invention.

**Table 6**

| ***Ingredients %*** | | **F-14** | **F-15** | **F-16** |
|---|---|---|---|---|
| Polymer F | | 29.6 | 33.1 | 31.9 |
| R-1090 | | 44.4 | | 47.9 |
| S-1100 | | | 23.5 | |
| S-5100 | | | 23.5 | |
| S-120 | | | 2.2 | 6.4 |
| E-155 | | 13.3 | | |
| O-68 | | 11.7 | | 12.8 |
| N-810 T | | | 16.7 | |
| I-1010 | | 1 | 1 | 1 |

| ***Properties*** | Units | | | |
|---|---|---|---|---|
| RBT | Cm | >30 | >30 | |
| LT | N/25 mm | 5 | 8 | |
| PA | N/25 mm | 14.8 | 17 | |
| HP ss 2 kg | Hours | >300 | >300 | |
| SAFT 0.5 kg | °C | 110 | 113 | |
| HMV 177 °C | Pa.s | 106 | 105 | * |
| HMV 190°C | Pa.s | 48 | 47 | |

| | | | | |
|---|---|---|---|---|
| 1. * formulation is not hot-melt processable. | | | | |

### Example 6

Table 7 shows that the addition of a second block copolymer in the formulation containing 32% of rubber, raises the service temperature, but shows a much higher hot-melt viscosity than the formulation F-7 in Table 4 that contains only one polymer. These compositions give a less attractive service temperature/hot-melt viscosity balance. There is therefore no additional advantage to use a blend of polymers.

**Table 7**

| ***Ingredients %*** | ***Units*** | **F-17** | **F-18** | **F-19** |
|---|---|---|---|---|
| Polymer F | | 29 | 28.5 | 28.4 |
| Polymer G | | 3 | 4.6 | |
| Polymer H | | | | 4.7 |
| S-1100 | | 25.5 | 25.1 | 25.1 |
| S-5100 | | 25.5 | 25.1 | 25.1 |
| P-352 | | 16 | 15.7 | 15.7 |
| I-1010 | | 1 | 1 | 1 |
| Tg | °C | -15 | -15 | |
| Polymer E | % | 28.9 | 28.5 | 28.9 |
| Polymer F | % | 3.1 | 4.57 | |
| Polymer G | % | | | 3.1 |
| RBT | Cm | 26 | 26 | >30 |
| LT | N/25 mm | 17 | 13 | 13 |
| PA | N/25 mm | 17 | 15 | 17 |
| HP ss 2 kg | Hours | >500 | >500 | >500 |
| SAFT 0.5 kg | °C | 117 | 122 | 116 |
| HMV 177°C | Pa.s | 62 | 140 | 61 |
| HMV 190°C | Pa.s | | 63 | |

## Claims

1. A pressure sensitive adhesive composition possessing a good balance of excellent tack, excellent cohesion, excellent service temperature, reduced melt viscosity and oxidative stability and weather resistance, comprising calculated on 100% of all the components,
(i) 30 to 45% of one or more block copolymers of structure ABA or (AB)ₙ-X or ABABA or BABAB or ABAB were each A independently is a polymer block of a monoalkenyl arene; each B block independently is a polymer block of a conjugated diene, or a mixture of conjugated dienes, hydrogenated in such a manner to leave a residual unsaturation content below 20% and preferably less than 1% and wherein the or each B block has more than 25% in weight of carbon atoms in the side chain; X is the residue of a coupling agent; n is an integer ranging from 2 to 8; the number average molecular weight of A is between 7 000 and 20 000, the monoalkenyl arene content of the or each block copolymer being between 10% and 35% by weight,
(ii) 40 to 55% of one or more tackifying resins compatible with block B or partially compatible with both blocks A and B.
(iii) 5 to 25 % of a plasticizer
(iv) and optionally additional components such as polyolefins, antioxidants, fillers, UV stabilizers and end-block compatible resins.

2. The adhesive composition according to claim 1 wherein said monoalkenyl arene is styrene and said conjugated diene is butadiene, isoprene or a mixture thereof.

3. The adhesive composition according to any one of claims 1 and 2, wherein the or one of the tackifying resins is a partially hydrogenated aromatic resin to increase the adhesion to polar substrates, and wherein in case of a blend of resins, the content of said resin is between 5 and 80%, preferably 15 to 60% (by weight).

4. The adhesive composition according to any one of claim 1, 2 and 3 wherein for obtaining a weather resistant adhesive, fully hydrogenated polymers and hydrocarbon resins are used.

5. The adhesive composition according to any one of claims 1-4 wherein said plasticizers include plasticizing oils like low aromatic content hydrocarbon oils that are paraffinic or naphthenic in character (carbon aromatic distribution ≤ 5%, preferably < 2%, more preferably 0% as determined according to DIN 51378); olefin oligomers; low molecular weight polymers (≤ 30000 g/mol) like liquid polybutene, liquid polyisoprene copolymers, liquid styrene/isoprene copolymers or liquid hydrogenated styrene/conjugated diene copolymers; vegetable oils and their derivatives; or paraffin and microcrystalline waxes.

6. The adhesive composition according to claim 1 wherein said optional polyolefins are amorphous polyalpha-olefins, such as low molecular weight saturated homopolymers, like atactic homopropylene, copolymers of ethylene/propylene, copolymers of propylene/hexane, terpolymers of ethylene/propylene/butene, metallocene polyolefine elastomers, partial crystalline ethylene/propylene rubbers.

7. The adhesive composition according to claim 1 wherein said antioxidants are either primary antioxidants like hindered phenols or secondary oxidants like phosphite derivatives or blends thereof.

8. The adhesive composition according to claim 1 wherein for protecting the composition against UV light, the UV stabilizers are selected amongst benzotriazoles derivatives and hindered-amine light stabilizers.
